# EUROPÄISCHE PATENTSCHRIFT

(11) **EP 2 030 653 B1**
(45) Veröffentlichungstag und Bekanntmachung des Hinweises auf die Patenterteilung: **27.05.2015**
(21) Anmeldenummer: 08405200.0
(22) Anmeldetag: 22.08.2008
(51) Int. Cl.: A62C 3/16

(54) **Kabeldurchführungsvorrichtung mit Brandschutz**
Flame-resistant cable feed-through device
Dispositif de passage de câble doté d'une protection anti-incendie

(30) Priorität: 28.08.2007 CH 13422007
(43) Veröffentlichungstag der Anmeldung: 04.03.2009
(73) Patentinhaber: Cablequick AG, 8806 Bäch (CH)
(72) Erfinder: Stünzi, Edwin, 8806 Bäch (CH)
(74) Vertreter: Frei Patent Attorneys

(56) Entgegenhaltungen:
- DE-A1- 10 251 908
- JP-A- 11 173 648
- US-A- 4 249 353
- US-A- 4 467 577
- US-A1- 2007 125 018

## Beschreibung

Die Erfindung liegt auf dem Gebiet des Brandschutzes für Kabeldurchführungen.

In EP 0 077 679 wird ein Brandschutzsystem für einen Kabelkanal beschrieben. Darin sind im Kabelkanal Behälter mit einer nichtbrennbaren Flüssigkeit gefüllt, eingebracht. Im Brandfall schotten die Behälter den Kabelkanal ab, ein Teil der Wärme wird für die Verdampfung der Flüssigkeit gebraucht und bei weiter zunehmender Wärme werden die Behälter aufgelöst und die restliche Flüssigkeit verdampft. Dadurch wird die Zeit, in der der Kabelkanal unbeschadet dem Feuer ausgesetzt ist, erhöht.

Dieses Brandschutzsystem hat diverse Nachteile. Es ist aufwändig und leckanfällig. Es dürfte auch wenig erwünscht sein Kabel einer Flüssigkeit auszusetzen. Ist das Wasser verdunstet, existiert kein Brandschutz mehr. Zudem ist dieses System für einen Kabelkanal gedacht, für Durchgänge z. B. durch Wände, wie beispielsweise Kabeldurchführungen, ungeeignet.

Nun sind Brandabschottungen bekannt, welche auf der Basis eines sich durch Hitze aufschäumenden Kunststoffes beruhen, wobei sich das Volumen dabei um ein Mehrfaches vergrössert. Das in der Regel thermisch isolierende Material wird dabei beispielsweise als Abdichtung zwischen Fenster und Fensterrahmen oder Tür und Türrahmen angebracht. Im Brandfall schäumt das Material auf und dichtet somit jeglichen Durchgang von Zugluft ab, so dass kein Übergreifen des Brandes stattfinden kann. Mit der Aufschäumung geht gleichzeitig eine verminderte Wärmeleitfähigkeit einher, so dass Räume auch wärmetechnisch voneinander abgeschlossen werden.

Ein solches Brandschutzmaterial ist unter dem Namen "FIREBLOCK" der Firma Huber & Suhner AG bekannt. Dieses ist halogenfrei, thermisch isolierend, flexibel und weist eine hohe Blähbarkeit im Brandfall auf. Aufgrund seiner guten Bearbeitbarkeit wird dieses Material auch als Kabelhülsen in Schaltschränken und bei Kabeldurchführungen verwendet.

Die Verwendung von aufschäumendem Brandschutzmaterial wird in US2007/0125018 für einen Kabelkanal, als Verbindungsteil zwischen zwei benachbarten Räumen, beschrieben. Dabei sind im Kanal zwei Polsterschichten aus Brandschutzmaterial sich gegenüberliegend angeordnet. Um auch bei einer unterschiedlichen Anzahl von Kabeln im Kanal ein möglichst enges Anliegen des Materials an den Kabeln zu gewährleisten, ist der Abstand zwischen den Polsterschichten einstellbar. Zudem werden die beiden Schichten federnd montiert und können mit einer zusätzlichen Federkraft beaufschlagt werden.

Der Nachteil dieser Vorrichtung ist, dass die Kraft, die auf wenige und viele Kabel wirkt, nicht dieselbe ist. Wird das System darauf ausgerichtet wenige Kabel eng zu umschliessen, so wird eine grosse Anzahl von Kabeln nach dem Einbau des Kanals nur noch schwer oder nicht mehr einzubringen sein, da sich die Kraft, welche auf die Kable drückt, mit zunehmender Anzahl der eingebrachten Kabel vergrössert. Wird das System jedoch auf viele Kabel ausgerichtet, so liegen wenige Kabel relativ lose im Kanal drin. Dies ist nicht nur nachteilig in Bezug auf Zugluft, sondern auch aufgrund einer nicht vorhandenen Fixierung der Kabel in der Kanalvorrichtung (Zugentlastung).

Ein weiterer Nachteil ist, wie bereits erwähnt, dass die Vorrichtung nur beschränkt vor Zugluft schützt. Die auch für diesen Zweck eingebrachten Folienschlaufen werden nach Einführung eines Kabels zur Seite geschoben, so dass Zugluft begünstigt wird. Zudem handelt es sich bei der beschriebenen Vorrichtung um einen Kabelkanal, der nicht als Kabeldurchführung durch eine einzelne Wand bzw. Wandseite geeignet ist.

In US 4,249,353, die den Oberbegriff des Anspruchs 1 bildet, werden nun Kabeldurchführungen für einzelne Wände mit Brandschutz und Schutz vor Zugluft beschrieben, worin jedes Kabel einzeln geführt ist. Der Aufbau der Kabeldurchführung ist vollständig segmentiert und kann je nach Bedarf gemäss Anzahl und Grösse der Kabel zusammengesetzt werden. Dabei werden entsprechend gestaltete Segmente aus elastischem, aufschäumendem Brandschutzmaterial in einen Rahmen eingeschoben. Über dem Brandschutzmaterial sind entsprechend segmentierte Druckplatten angebracht. Durch Zusammenschrauben der Druckplatten wird das Brandschutzmaterial zusammengepresst und schliesst dabei Zwischenräume zwischen den Segmenten und dem Rahmen, sowie den Kabeln.

Nebst der eventuell unerwünschten Handhabung von zahlreichen Einzelteilen, ist ein nachträgliches Bestücken mit Kabeln nach dem Befestigen des Rahmens kaum möglich. Ein Einführen durch das Brandschutzmaterial ist aufgrund der Reibungskräfte, zumindest nicht ohne vorheriges Lösen der Druckplatten möglich.

Die Erfindung stellt sich nun die Aufgabe, eine Kabeldurchführungsvorrichtung mit Brandschutz zu schaffen, welche eine platzsparende Möglichkeit zum Einbringen mehrerer Kabel und zudem einen zuverlässigen Brandschutz in bestücktem und unbestücktem Zustand erlaubt.

Diese Aufgabe wird gelöst durch die Kabeldurchführungsvorrichtung mit Brandschutz, wie sie in den Ansprüchen definiert ist.

Die erfindungsgemässe Kabeldurchführungsvorrichtung mit Brandschutz lehnt an eine aus CH 688 012 bekannte Haltevorrichtung für Kabel in Wandungen an. Die dort beschriebene Haltevorrichtung erlaubt ein platzsparendes und rationelles Halten von mehreren Rundkabeln. Die Vorrichtung besteht aus einem Sandwichaufbau von mehreren Platten, welche Öffnungen für die Durchführung von Kabeln aufweist. Der Sandwichaufbau beinhaltet zudem eine flexible Platte und eine Verriegelungsplatte, mit welcher eine Abdichtung der Platte und jedes einzelnen Kabels, sowie auch eine Zugentlastung der eingeführten Kabel erreicht wird.

Die Kabeldurchführungsvorrichtung mit Brandschutz weist eine Grundplatte, eine Rückplatte und eine parallel dazu und dazwischenliegende Brandschutzplatte aus einem bei Hitze aufschäumendem Material auf. Die Grundplatte und Rückplatte weisen dabei mindestens eine Durchführungsöffnung für Kabel, Schläuche etc. auf, wobei bei mehreren Durchführungsöffnungen diese vorzugsweise unterschiedliche Durchmesser für unterschiedliche Anwendungen bzw. unterschiedliche Kabelgrössen aufweisen. Des weiteren weist die Kabeldurchführungsvorrichtung ein Mittel zur Druckbeaufschlagung der Brandschutzplatte auf, mit welchem die Brandschutzplatte oder das gesamte Plattensystem auch im Brandfall mit einem gewissen Druck beaufschlagt wird. Das Mittel zur Druckbeaufschlagung ist bevorzugt mindestes ein Federelement, welches das Plattensystem mit Druck beaufschlagt.

Die Brandschutzplatte besteht aus einem, bei Hitze vorzugsweise auf ein Mehrfaches seines Volumens aufschäumenden Kunststoffmaterials. Das Material ist nicht oder nur schwer brennbar, z. B. selbstauslöschend. Es weist in unaufgeblähtem Zustand vorzugsweise eine gute thermische Isolation auf. Durch eine Aufschäumung werden die thermischen Isolationseigenschaften vorzugsweise ebenfalls um ein Mehrfaches erhöht. Die Brandschutzplatte ist bevorzugt aus dem eingangs beschriebenen FIREBLOCK Material der Firma Huber & Suhner AG.

Steigt nun eine Temperatur in einem Raum höher als eine bestimmte Blähtemperatur, so beginnt das Brandschutzmaterial sich aufzublähen. Das aufgeblähte Material dehnt sich stark aus und dichtet sämtliche vorhandenen Öffnungen und verbessert gleichzeitig die thermische Isolation in seiner Umgebung. Je schneller dies geschieht, desto besser kann beispielsweise ein Luftzug-Weiterbrand verhindert werden.

Um diese Abdichtung beim Aufschäumen zu optimieren, weist die Kabeldurchführungsvorrichtung ein Federelement zur Druckbeaufschlagung der Brandschutzplatte im Brandfall auf. Damit wird die Brandschutzplatte, vorzugsweise über das Plattensystem mit einem gewissen Druck beaufschlagt. Anhand der Ausführungsform mit mindestens einem Federelement ist die Wirkungsweise im folgenden beschrieben.

Durch den vorzugsweise einstellbaren Druck über ein Federelement, welches senkrecht von aussen auf das Plattensystem einwirkt, werden die Platten nicht nur im 'Normalzustand', also bei der Montage und Befestigung der Vorrichtung, ohne Hitzeeinwirkung gegeneinander gedrückt. Mit dem Druck in Form eines Federelements wird erzwungen, dass die Grund- und Rückplatte weiter gegeneinander gedrückt werden, auch wenn bereits Material der Brandplatte durch die Durchführungsöffnungen ausgetreten ist. Ohne diese zusätzliche gerichtete Druckbeaufschlagung würde sich aufschäumendes Material im wesentlichen gleichmässig zwischen den Platten verteilen und ein sich beispielsweise durch eine anfängliche Verschraubung vorhandener Druck umgehend abbauen. Mit der weiteren Druckbeaufschlagung durch das Federelement jedoch wird das Brandschutzmaterial gerichtet aus den Öffnungen gedrückt und verteilt sich somit ausschliesslich in und um die Öffnungen der Grundplatte und gegebenenfalls auch in und um diejenigen der Rückplatte. Die Öffnungen, in welchen sich gegebenenfalls geschmolzene Kabel befinden, werden damit rascher abgeschlossen als dies ohne Druckbeaufschlagung während des Aufschäumens der Fall wäre. Dadurch kann Brandzugluft durch die Kabeldurchführungsvorrichtung hindurch und damit auch ein Durchbrennen besser verhindert werden. Versuche haben gezeigt, dass aufgrund der Druckbeaufschlagung des Plattensystems auch während des Aufschäumens, die Zeit für ein Abdichten der Öffnungen um ein Vielfaches verkürzt wird. Damit kann erreicht werden, dass die Durchführungen bereits geschlossen sind, bevor in einem Raum hohe Temperaturen, z.B. > 200°-300C, erreicht werden.

Um ein möglichst rasches Aufschäumen bei erhöhten Temperaturen weiter zu begünstigen, kann die Wärme möglichst rasch der Brandschutzplatte zugeführt werden. Dies ist beispielsweise durch die Verwendung von Metall als Grundplatten- und Rückplattenmaterial realisierbar. Insbesondere die Verwendung von Edelstahl findet in Gebieten wie Pharmazie, Chemie, Lebensmittel etc. Anwendung, also insbesondere überall dort wo Reinraumatmosphäre Bedingung ist, aber auch in Standard-Industrieanwendungen.

Im Gegensatz zu den in US 4,249,353 oder US 4,061,344 beschriebenen Durchführungen, wird keine zusätzliche dünne isolierende und aufschäumende Materialschicht aussen an der Durchführungsvorrichtung aufgebracht. Dort ist eine möglichst grosse Verzögerung bis eine erhöhte Temperatur die eigentliche Durchführung erreicht, erwünscht. In der vorliegenden Erfindung ist ein rascheres Aufschäumen der eigentlichen Brandschutzschicht möglich und erwünscht, um eventuelle Brandzugluft aufgrund nicht vollumfänglich abgedichteter Kabeldurchführungen oder durchgebrannter Kabel vollständig zu verhindern.

Das Mittel zur Druckbeaufschlagung der Brandschutzplatte der vorliegenden Erfindung kann mit einer Schraubverbindung, wie aus dem genannten Stand der Technik bekannt, kombiniert werden. Vorzugsweise übernimmt das Mittel zur Druckbeaufschlagung der Brandschutzplatte, beispielsweise in der Form eines oder mehrerer Federelemente, jedoch auch bereits die gesamte anfängliche Druckbeaufschlagung des Plattensystems.

Eine weitere Ausführungsform der Kabeldurchführungsvorrichtung weist zwischen Grundplatte und Rückplatte eine Abdichtungsplatte auf. Die Abdichtungsplatte besteht aus einem elastischen Material und dichtet ein Kabel nach dessen Einführung hermetisch, z.B. gegen Staub, Feuchtigkeit etc., ab.

Abdichtungsplatte und Brandschutzplatte weisen bevorzugt Solldurchführungen auf, welche vorzugsweise nur im Benutzungsfall durchbrochen oder durchstossen werden und ansonsten die Durchführungsöffnungen der Vorrichtung abdichten und im Brandfall, im Fall einer Brandschutzplatte, zusätzlich Aufschäumen.

Die Solldurchführungen der Abdichtungsplatte können so ausgestaltet sein, dass sie wiederverschliessbar sind. Auch im wiederverschlossenen Zustand sind die Solldurchführungen vorzugsweise vollständig dicht gegenüber Brandzugluft.

Abdichtungsplatte und Brandschutzplatte können in Wechselwirkung miteinander als Abdichtung und Zugentlastung funktionieren, wie dies in CH 688 012 beschrieben ist. Die Brandschutzplatte übernimmt dabei vorzugsweise die Funktion der dort beschriebenen Verriegelungsplatte. Es kann auch eine separate Verriegelungsplatte vorgesehen werden.

Die Kabeldurchführungsvorrichtung ist insbesondere geeignet für Decken, Wände, Schaltschränke etc. und weist vorzugsweise in der Grundplatte entsprechende Befestigungsmittel zur Montage der Vorrichtung auf. Die einfachste Variante mit Grundplatte, Brandschutzplatte und Rückplatte kann in Gebieten eingesetzt werden, wo keine besonderen Anforderungen an eine Abdichtung gestellt werden, z.B. in Kellerräumen. Aufwändigere Ausführungsformen mit wiederverschliessbaren Durchführungen in Abdichtungsplatten sind entsprechend geeignet für Anwendungsgebiete mit höheren Ansprüchen bzgl. Abdichtung. Dies gilt in Bezug auf einen bestückten oder unbestückten Zustand, aber auch in Bezug auf eine Wiederbestückbarkeit der einzelnen Durchführungen.

In Ausführungsformen mit Abdichtungsplatten ist für eine einseitige Brandabschottung, eine Brandschutzplatte vorzugsweise direkt benachbart zur Grundplatte oder Rückplatte angeordnet. Für eine beidseitige Brandabschottung sind entsprechend zwei Brandschutzplatten vorzugsweise direkt benachbart zur Grundplatte und Rückplatte, also beidseitig einer Abdichtungsplatte, angeordnet.

Der kompakte Sandwichaufbau der Vorrichtung und vorzugsweise eine zusätzlich geeignete Wahl des Materials der Brandschutzplatte und gegebenenfalls der Abdichtungsplatte, gewährt eine hohe Schallisolation. Dies ist speziell in Anwendungen der Kabeldurchführungsvorrichtung in Hohldecken oder -wänden von Vorteil.

Beispielhafte Ausführungsformen der erfindungsgemässen Kabeldurchführungsvorrichtung mit Brandschutz werden im Zusammenhang mit den folgenden Figuren im Detail beschrieben. Dabei zeigen:
- **Figur 1**: eine erste Ausführungsform der Kabeldurchführungsvorrichtung mit vorderseitigem Brandschutz (Explosionszeichnung);
- **Figur 2**: Vorderseite der Ausführungsform gemäss Fig. 1 mit aufgeschäumtem Brandschutzmaterial;
- **Figur 3**: Seitenansicht der aufgeschäumten Ausführungsform gemäss Fig. 1;
- **Figur 4**: Rückseite der Ausführungsform gemäss Fig. 1:
- **Figur 5**: eine weitere Ausführungsform der Kabeldurchführungsvorrichtung mit vorder- und rückseitigem Brandschutz (Explosionszeichnung);
- **Figur 6**: Rückseite der Ausführungsform gemäss Fig. 2 mit aufgeschäumtem Brandschutzmaterial;
- **Figur 7**: Seitenansicht der aufgeschäumten Ausführungsform gemäss Fig. 5;
- **Figur 8**: Abbildungen von während der Hitzebehandlung teilweise bestückten Kabeldurchführungsvorrichtungen;
- **Figur 9**: Brandschutzplatte mit Detailansicht.

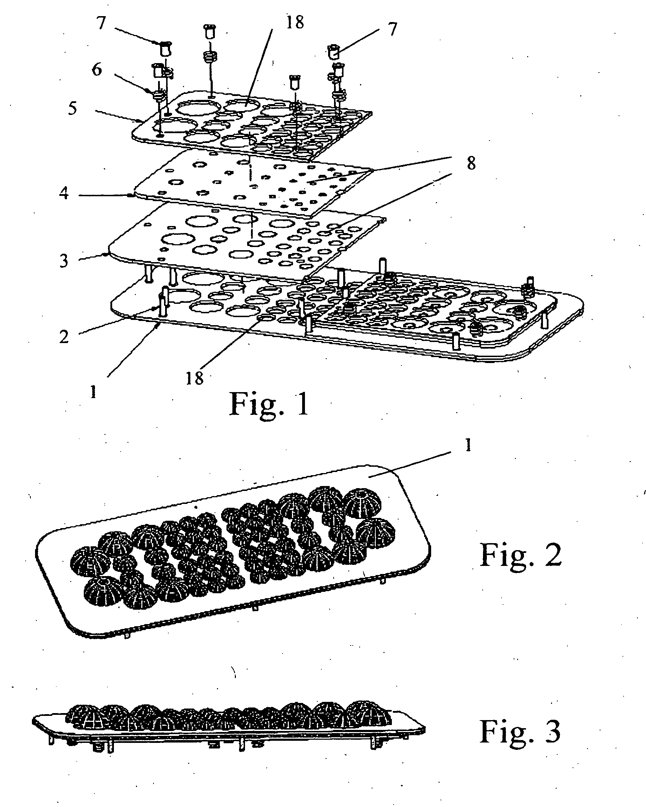

**Figur 1** zeigt eine erfindungsgemässe Kabeldurchführungsvorrichtung mit vorder- oder einseitigem Brandschutz, eine Brandabschottung mit einseitiger Abdichtung. In der linken Hälfte der Figur sind die Bestandteile der Vorrichtung in einer Explosionsdarstellung gezeigt. In der rechten Hälfte der Zeichnung ist die Vorrichtung in fertigem, aber unmontiertem Zustand gezeigt. Die Kabeldurchführungvorrichtung weist eine Grundplatte 1 mit Befestigungsmitteln 2, z. B. Gewindebolzen, in einem inneren und in einem Randbereich der Grundplatte auf. Die Gewindebolzen im Randbereich dienen zur Montage der Grundplatte bzw. der Vorrichtung an beispielsweise einer Wand.

Auf die Grundplatte folgt eine Brandschutzplatte 3, welche in dieser Ausführungsform dieselben Ausmasse wie die der Grundplatte aufweist. Darauf folgt eine Abdichtungsplatte 4 und eine Rückplatte in der Form einer Andruckplatte 5, welche sich in dieser Ausführungsform beide nicht bis in den Randbereich der Grundplatte erstrecken. Die einzelnen Platten können auch gleich gross sein, wobei dann in der Regel eine gesonderte Gehäusedichtung verwendet wird.

Abschliessend sind Spiralfedern 6 und Muttern 7 aufgebracht, welche mit den Gewindebolzen im inneren Bereich der Grundplatte zusammenwirken und einen Zusammenhalt des und eine Druckausübung auf das Plattensystem, auch im Brandfall, also bei sich physikalisch verändernder Brandschutzplatte, erlauben.

Die Spiralfedern 6 können auch anders gestaltete Federelemente, beispielsweise gebogene Federbleche sein. Die Muttern sind hier als Blindnietmuttern gezeigt, können jedoch auch beispielsweise mit Sechskantmuttern ersetzt werden.

Grundplatte und Andruckplatte und weisen mehrere unterschiedlich grosse Öffnungen 18 für die Durchführung von Kabeln, Schläuchen, Rohren etc. mit unterschiedlichen Durchmessern auf. In der Brandschutzplatte 3 und Abdichtungsplatte 4 sind an den entsprechenden Stellen Solldurchführungen 8 eingebracht, welche erst durch das Durchstossen eines Kabels geöffnet werden. Die Solldurchführungen der Abdichtungsplatte sind zudem vorzugsweise wiederverschliessbar.

Die Abdichtungsplatte ist aus einem hochelastischen, dehnfähigen Material, z.B. aus Silikon, EPDM (Ethylen-Propylen-Dien-Kautschuk) oder HNBR (Vollhydrierter Nitril-Butadien Kautschuk) und dichtet die Öffnungen in der Vorrichtung vorzugsweise in nicht bestücktem Zustand ab. In bestücktem Zustand schliesst sich das Material der Abdichtungsplatte vollständig um ein Kabel, wobei das Material reissfest ist, derart, dass es auch nach mehrmaligem Wieder-Bestücken nicht ausreisst.

Eine Wiederverschliessbarkeit ist dadurch erreichbar, dass Durchführungen in die Abdichtungsplatte eingebracht werden, wobei die unvollständigen Ausstanzung über einen Haftpunkt oder Haftbereich mit der Platte verbunden bleibt. Beim Bestücken wird die unvollständige Ausstanzung aus der Öffnung gedrückt, aber nicht abgerissen. Nach dem Entfernen des Kabels kann mit der unvollständigen Ausstanzung die Öffnung entsprechend wieder verschlossen werden.

Im nichtbenutzten Zustand der Öffnungen, auch nach einem Wiederverschliessen, ist die Kabeldurchführungsvorrichtung damit vollständig dicht gegenüber Brandzugluft.

Öffnungen und Solldurchführungen in der Form von Ausstanzungen oder unvollständige Ausstanzungen können durch bekannte Verfahren hergestellt, z.B. gestanzt, geschnitten, werden. Je nach Material, z.B. für die Brandschutzplatte eignet z. B. Wasserstrahl.

Besonders gut geeignet für Abdichtungsplatten mit wieder verschliessbaren Durchführungen, sind eigens für diese Anwendungen optimierte EPDM und HNBR. Diese Materialien garantieren eine genügend hohe Dehnbarkeit, ohne auszureissen, so dass auch im Bereich der Haftpunkte der Stanzungen keine Kerbrisse entstehen. Werden die unvollständigen Ausstanzungen als Rundschnitt in der Form von Kreiszylindern mit seitlichen Einschnürungen gestaltet (Hohlschnitt), ist eine besonders gute Abdichtung gegeben.

Im Zusammenwirken mit der Brandschutzplatte kann die Abdichtungsplatte zugleich als Zugentlastung dienen. Wie eine solche Zugentlastung vorgesehen werden kann ist in CH 688 012 beschrieben, wobei die bei erhöhten Temperaturen elastische Brandschutzplatte die dort beschriebene Verriegelungsfunktion der dortigen Verriegelungsplatte übernimmt.

Die Durchmesser der Durchführungen sind vorzugsweise so aufeinander abgestimmt, dass ein Freilauf beim Einbringen von Kabeln garantiert ist und eine Verriegelung in Kombination mit der Brandschutzplatte aktiviert wird. Die Durchführungen der Andruckplatte sind somit vorzugsweise wenig grösser als die der Grundplatte. Die Solldurchführungen der Brandschutzplatte sind wenig kleiner oder gleich dem Durchmesser eines einzubringenden Kabels. Insbesondere die Solldurchführungen der Abdichtungsplatte sind kleiner als die Durchmesser der einzubringenden Kabel, um eine möglichst hermetische Abdichtung zu garantieren.

Die Grund- und Andruckplatten sind bevorzugt aus Edelstahl. Sie können jedoch auch aus einem anderen geeigneten Material, wie Metall, Kunststoff, Keramik etc. sein. Da Wärme, die bei einem Feuer entsteht, möglichst rasch zur Brandschutzplatte weitergeleitet werden sollte, damit diese ihre Brandschutzwirkung entfalten kann, sind die umgebenden Platten und Materialien vorzugsweise thermisch gut leitend, zumindest auf der Seite der Vorrichtung, auf welcher die Brandschutzplatte vorgesehen ist.

Die Brandschutzplatte 3 besteht aus einem unter Hitzeeinwirkung aufschäumenden Material, vorzugsweise auf ein Mehrfaches seines Volumens. Es weist vorzugsweise eine gute thermische Isolation, auch in unaufgeschäumtem Zustand auf. Vorzugsweise ist das Brandschutzmaterial auch eine gute Schallisolation, so dass die mit der Kabeldurchführungsvorrichtung abgedichteten Durchführungen schallisoliert sind. Die Brandschutzplatte ist bevorzugt aus dem besonders geeigneten und eingangs beschriebenen FIREBLOCK Material.

Steigt eine Temperatur in einem Raum höher als bspw. 100°C, so beginnt das Brandschutzmaterial sich aufzublähen. Es entsteht ein Blähdruck aufgrund des sich aufschäumenden und sich ausdehnenden Materials. Da z.B. Schläuche bei Feuer sehr rasch abgebrannt werden, schliesst sich das aufgeschäumte Material schnell um und über die abgebrannten Stellen. Nachdem Wärme über die Grundplatte 1 rasch zum Brandschutzmaterial weitergeleitet wurde, wird über die Springfedern, welche einen einstellbaren, aber in montiertem Zustand festgelegten Druck ausüben, bestimmt, wie schnell das aufschäumende Material aus den Öffnungen in der Grundplatte 1 ausgestossen wird. Über den eingestellten Federdruck, der senkrecht auf sämtliche Platten und parallel zu den Kabeln bzw. Öffnungen einwirkt, wird erzwungen, dass das aufschäumende Material sich fast ausschliesslich in und um die Öffnungen verteilt und diese damit rasch abschliesst. Die Federn sind in unaufgeblähtem Zustand der Vorrichtung gespannt und ein Druck wird auf das Plattensystem ausgeübt. Im Brandfall schäumt das Brandschutzmaterial auf und tritt aus den Öffnungen aus. In einem gewöhnlich zusammengeschraubten Plattensystem, wie z.B. aus US4,061,344 oder US 4,249,353 bekannt, wirkt der Druck des aufblähenden Materials nach allen Seiten gleich. Kein oder nur noch ein stark verminderter und sich sehr rasch abbauender Druck wirkt auf das Brandschutzmaterial, sobald dieses zu einem Teil aus dem Plattensystem ausgetreten ist. Die Federkraft bewirkt nun, dass die Andruckplatte ständig in Richtung Grundplatte und dabei auf das Brandschutzmaterial und gerichtet aus den Kabelöffnungen, drückt. Während in den bekannten Plattensystemen zwischenliegende Platten nur im Ruhezustand mit einem gewissen Montagedruck versehen sind, kommt in der vorliegenden Erfindung, die zusätzliche Federkraft in Betrieb der Vorrichtung, also im Brandfall, d.h. beim Aufblähen der Brandschutzplatte, zum tragen. Durch eine Druckbeaufschlagung wird das weich werdende Material förmlich aus den Öffnungen gedrückt. Versuche haben gezeigt, dass ein vollständiges Aufschäumen ohne zusätzliche Federkraft, welches ca. 10 min. dauerte, mit Federkraft auf ca. 3min reduziert werden konnte. Eine solch massive Zeitersparnis kann in Brandfällen von höchster Wichtigkeit sein, insbesondere um Brandzugluft abzuschotten.

Das oder die Federelemente werden so abgestimmt, dass sie über im wesentlichen eine gesamte Höhe einer Brandschutzplatte von z.B. 3mm, wirken können. Eine eingestellte Gewichtskraft bewegt sich dabei vorzugsweise in einem Bereich von 15-40 kg, z.B. 20-35kg. Diese Werte sind entsprechend auf Brandschutzplattendicke und Durchführungsöffnungsdurchmesser angepasst.

Sämtliche Platten, insbesondere Grund- und Rückplatten, sind vorzugsweise einstückig. Dies erlaubt eine sehr einfache Zusammensetzung und Montage der Kabeldurchführungsvorrichtung. Zudem müssen so lediglich Durchführungen von Kabeln und keine Zwischenräume von beispielsweise einzelnen Segmenten abgedichtet und vor Zugluft geschützt werden.

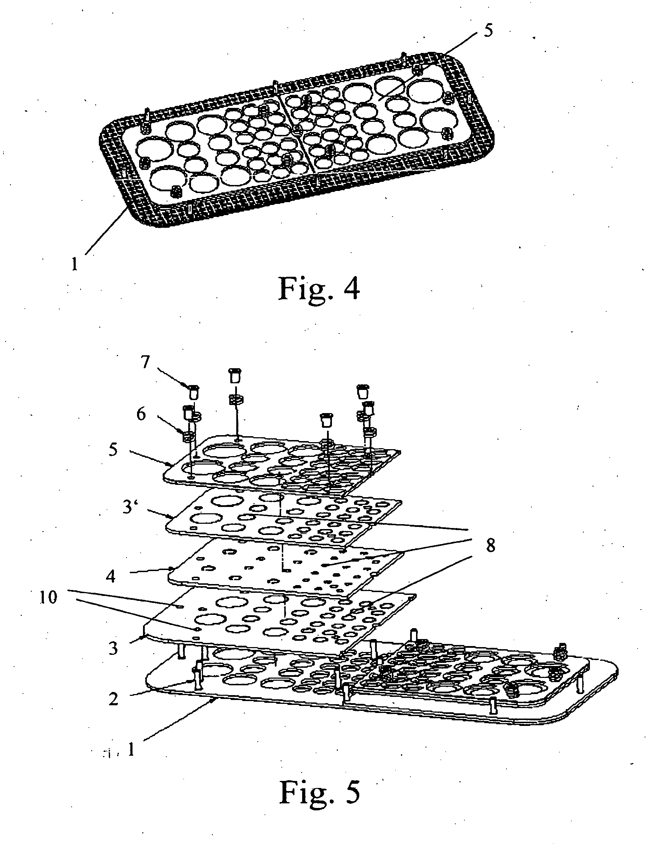

In den **Figuren 2 bis 4** ist eine Ansicht auf die Vorderseite (Grundplatte), eine seitliche Ansicht und eine Ansicht auf die Rückseite der Kabeldurchführungsvorrichtung gemäss Figur 1 nach dem Aufschäumen der Brandschutzplatte gezeigt. In der Plattenabfolge ist zwischen Grundplatte 1 und Abdichtungsplatte 4 eine Brandschutzplatte 3 eingebracht, so dass die rückwärtige Seite der Kabeldurchtührungsvorrichtung äusserlich vor aufschäumendem Material unbeeinflusst bleibt. Figur 4 zeigt somit auch die Ansicht auf die Rückseite in unaufgeschäumtem Zustand der Vorrichtung.

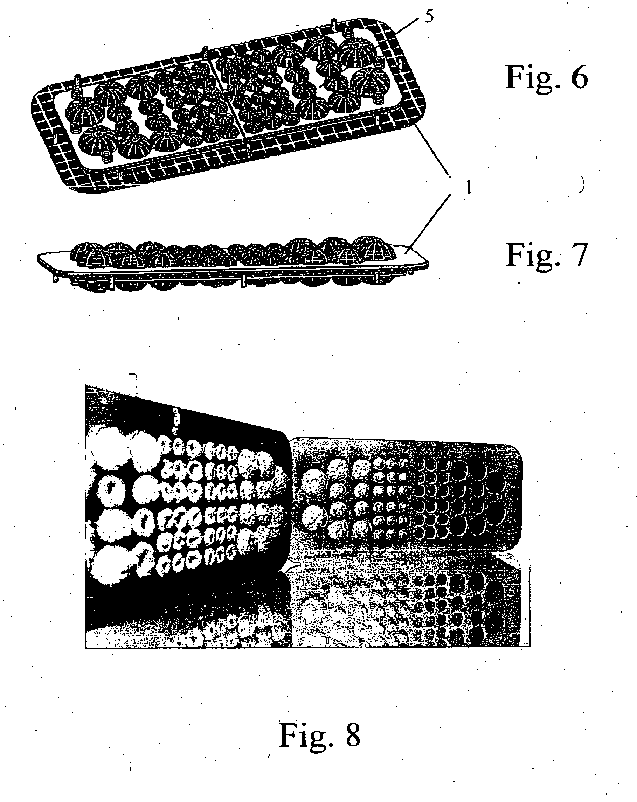

In **Figur 5** zeigt eine Kabeldurchführungsvorrichtung mit vorder- und rückseitigem Brandschutz, einer Brandabschottung mit beidseitiger Abdichtung. Die linke Seite der Zeichnung zeigt wiederum den Aufbau der Vorrichtung in Explosionsansicht, während die rechte Seite der Vorrichtung in zusammengesetztem Zustand gezeichnet ist. Gleiche Elemente sind dabei mit gleichen Bezugszeichen versehen. In dieser Ausführungsform ist jeweils eine Brandschutzplatte 3, 3' direkt benachbart zur Grundplatte 1 und zur Andruckplatte 5 angeordnet. Die beiden Brandschutzplatten 3, 3' sind durch eine Abdichtungsplatte 4 getrennt. Eine solche Kabeldurchführungsvorrichtung wirkt bezüglich Brandschutz doppelseitig. Nach einer entsprechenden Wärmeeinwirkung sind damit auch die Öffnungen auf der rückwärtigen Seite der Vorrichtung mit aufgeschäumtem Material abgedichtet. Dies ist in **Figur 6** zu sehen. Die Vorderseite gestaltet sich gleich wie die Vorderseite der einseitig wirkenden Ausführungsform gemäss Figur 2. **Figur 7** zeigt die seitliche Ansicht der aufgeschäumten Vorrichtung mit beidseitig aus den Kabeldurchführungen ausgetretenen Aufschäumungen.

Die Brandschutzplatte 3, welche benachbart zur Grundplatte 1 liegt, weist entsprechende Durchführungen 10 für die Befestigungsmittel 2 der Vorrichtung und des Plattensystems aneinander auf.

In Bezug auf einen garantierten Freilauf, d.h. um ein Bestücken und Entfernen der Kabel aus den Durchführungen zu ermöglichen, sind die Durchführungen der zweiten Brandschutzplatte 3' vorzugsweise grösser als diejenigen der ersten Brandschutzplatte, gegebenenfalls sogar so gross wie die Öffnungen der Rückplatte. Auch können die Durchführungen der zweiten Brandschutzplatte bereits durchbrochen sein, um eine Bestückung zu vereinfachen. Eine Brandabschottung wird durch die erste Brandschutzplatte unterstützt und eine Abdichtung ist insbesondere im Falle einer wiederverschliessbaren Abdichtungsplatte durch diese gegeben.

Die Ausführungsform beinhaltet wiederum Federelemente 6, über welche das Plattensystem rückseitig mit Druck beaufschlagt wird. Die Federn werden dabei über die Muttern 7 vorgespannt an der Grundplatte bzw. den Gewindebolzen 2 angebracht.

In **Figur 8** sind erfindungsgemässe Kabeldurchführungsvorrichtungen abgebildet. Beide Vorrichtungen sind nach Hitzeeinwirkung gezeigt. In der Abbildung links sind Aufschäumungen von bestückten und unbestückten Durchführungen zu sehen. Während unbestückte Durchführungen pilzartig zugeschäumt und abgedichtet sind (rechte und teilweise linke Bereiche der links abgebildeten Vorrichtung), sieht man bei zuvor eingebrachten Kabeln - die Kabel wurden nach der Brandsimulation wieder entfernt - ringförmige Aufschäumungen, welche sich jeweils isolierend und abdichtend um die Kabel gelegt haben.

In der Abbildung rechts sind auf der einen Hälfte die Öffnungen in der Grundplatte durch das aufgeschäumte Material der Brandschutzplatte verschlossen. Die Öffnungen in der rechten Hälfte der Vorrichtungen sind direkt durch die Abdichtungsplatte verschlossen.

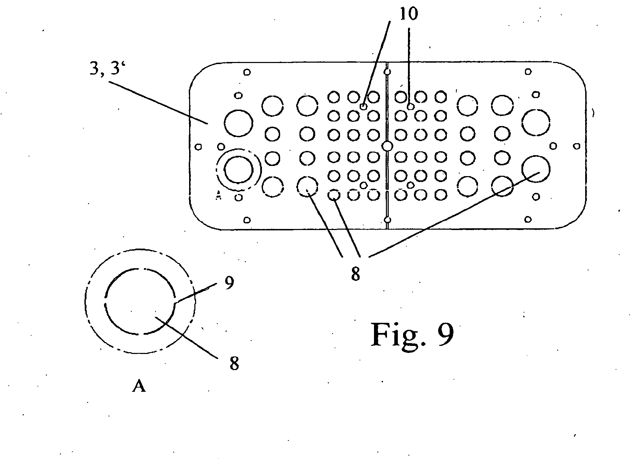

**Figur 9** zeigt eine Brandschutzplatte mit vergrössertem Ausschnitt A. Die Brandschutzplatte weist eine Vielzahl unterschiedlich grosser, sogenannter Solldurchführungen 8 auf. Dies sind Stellen in der Platte, welche als Durchführungsöffnungen vorgesehen sind, jedoch vor Gebrauch und bei Nichtgebrauch nicht durchbrochen werden. Die Solldurchführungen sind hier durch nicht vollständig durchbrochene ringförmige Stanzungen realisiert. Die Form der Solldurchführungen in der Brandschutzplatte sind vorzugsweise formangepasst, z.B. rund für Rundkabeln, schlitzförmig für Flachbandkabeln.

Das Innere der Durchführung bleibt über mehrere Haftpunkte 9, hier vier, mit der übrigen Platte verbunden. Werden Durchführungen in der Brandschutzplatte benötigt, wird das entsprechende Element mit wenig Druck ausgebrochen und ein Kabel kann in der Platte appliziert werden. Bei nicht benötigter Durchführung bleibt die Durchführung vorzugsweise geschlossen, was zusätzlich die Vorrichtung verstärkt und schützt und im Brandfall das Aufschäumen verstärkt.

Die Öffnungen 10 für Befestigungselemente sind typischerweise bereits vorgängig durchbrochen.

Die Erfindung erlaubt somit ein werkzeugfreies Bestücken, ggf. inkl. Abdichtung und Zugentlastung der Kabeldurchführungsvorrichtung. Sie erlaubt insbesondere auch ein nachträgliches Bestücken bei bereits montiertem Zustand der Vorrichtung, und dies ohne benachbarte Kabel durch Lösen, Schieben usw. zu beeinflussen, da jede Kabelposition ihre fix zugeteilten Platz hat.

Das Mittel zur Druckbeaufschlagung der Brandschutzplatte ist bevorzugt als einfache Feder ausgeführt. Es sind auch diverse andere Ausführungsformen des Mittels zur Durckbeaufschlagung als Federelemente möglich. Ein Beispiel eines anderen Federelements ist eine Federscheibenanordnung, welche noch zusätzlich gekapselt werden kann, um eine thermisch höhere Bestständigkeit aufzuweisen. Solche Federelemente üben Druck vor und während einem Brandfall aus. Eine andere Art der Druckbeaufschlagung kann so ausgestaltet sein, dass eine Druckbeaufschlagung der Brandschutzplatte oder des gesamten Plattensystems erst im Brandfall aktiviert wird. Diese Art mechanischer Schalter wird durch das Erreichen einer bestimmten erhöhten Temperatur ausgelöst. Das Schalten bewirkt dann beispielweise das Auslösen eines Mechanismus, z.B. Umklappen eines Metallteils, welcher dann Druck auf die Brandschutzplatte oder das gesamte Plattensystem ausübt. Dies kann auch in direkter Form geschehen, beispielweise in der Form eines angebrachten Bimetalls oder Memorymaterials, welches sich bei der erhöhten Temperatur in eine zuvor definierte bzw. gespeicherte Form verbiegt und dadurch Druck ausübt bzw. über einen bestimmen Zeitraum sogar aufbauen kann.

## Patentansprüche

1. Kabeldurchführungsvorrichtung mit Brandschutz mit einer Grundplatte (1) und einer Rückplatte (5), welche mindestens eine Durchführungsöffnung (18) zum Durchführen von Kabeln oder Schläuchen aufweisen, wobei parallel zu und zwischen Grundplatte und Rückplatte eine Brandschutzplatte (3,3') aus einem bei Hitze aufschäumendem Material angeordnet ist, **gekennzeichnet durch** ein Federelement zur Druckbeaufschlagung der Brandschutzplatte (3,3') im Brandfall.

2. Kabeldurchführungsvorrichtung nach Anspruch 1. wobei das Mittel zur Druckbeaufschlagung der Brandschutzplatte (3,3') so angeordnet ist, dass der ausgeübte Druck senkrecht zum Plattensystem wirkt

3. Kabeldurchführungsvorrichtung nach einem der Ansprüche 1-2, mit einer Abdichtungsplatte (4) zwischen Grundplatte (1) und Rückplatte (5).

4. Kabeldurchführungsvorrichtung nach Anspruch 3, wobei die Brandschutzplatte (3) zwischen Grundplatte (1) und Abdichtungsplatte (4) angeordnet ist.

5. Kabeldurchführungsvorrichtung nach Anspruch 3 oder 4, wobei die Brandschutzplatte (3) oder eine weitere Brandschutzplatte (3') zwischen Abdichtungsplatte (4) und Rückplatte (5) angeordnet ist.

6. Kabeldurchführungsvorrichtung nach einem der vorhergehenden Ansprüche, wobei die Brandschutzplatte (3,3') als Schallschutz vorgesehen ist.

7. Kabeldurchfürungsvorrichtung nach einem der vorhergehenden Ansprüche, wobei Abdichtungsplatte (4) und Brandschutzplatte (3,3') mindestens je eine Solldurchführung (8) aufweisen.

8. Kabeldurchführungsvorrichtung nach Anspruch 7, wobei die mindestens eine Solldurchführung (8) der Abdichtungsplatte (4) Mittel zum Wiederverschliessen der Solldurchführung aufwcist.

9. Kabeldurchführungsvorrichtung nach einem der vorhergehenden Ansprüche, wobei die Grundplatte (1) Befestigungsmittel (2) für eine Montage der Vorrichtung aufweist.

10. Kabeldurchführungsvorrichtung nach einem der vorangehenden Ansprüche, wobei die mindestens eine Durchführungsöffnung der Grundplatte (1) einen Durchmesser aufweist, welcher kleiner ist als der Durchmesser der mindestens einen Durchführungsöffnung der Rückplatte (5).

11. Kabeldurchführungsvorrichtung nach einem der vorhergehenden Ansprüche, wobei die Brandschutzplatte (3,3') eine Verriegelungsfunktion übernimmt.

12. Kabeldurchführungsvorrichtung nach Anspruch 11, wobei Abdichtungsplatte (4) und Brandschutzplatte (3,3') mittels aufeinander angestimmter Durchmesser der mindestens einen Solidurchführung (8) eine Kabelzugentlastung bilden.

13. Kabeldurchführungsvorrichtung nach einem der Anspruche 8 bis 12, mit einem Kabel bestückt, wobei die mindestens eine Solldurchführung (8) der Brandschutzplatte (3,3') einen Durchmesser aufweist, der kleiner oder gleich dem Durchmesser des Kabels ist, und wobei die mindestens eine Solldurchführung (8) der Abdichtplatte (4) kleiner ist als der Durchmesser des Kabels.

## Claims

1. A fire-resistant cable feed-through device with a base plate (1) and a back plate (5), which comprise at least one feed-through opening (18) for feeding through cables or flexible tubes, wherein a fire-resistant plate (3, 3') of a material foaming under heat is arranged parallel to and between the base plate and back plate, **characterised by** a spring element for pressure impingement of the fire-resistant plate (3, 3') in the case of fire.

2. A cable feed-through device according to claim 1, wherein the means for pressure impingement of the fire-resistant plate (3, 3') is arranged such that the exerted pressure acts perpendicularly to the plate system.

3. A cable feed-through device according to one of the claims 1 - 2, with a sealing plate (4) between the base plate (1) and the back plate (5).

4. A cable feed-through device according to claim 3, wherein the fire-resistant plate (3) is arranged between the base plate (1) and the sealing plate (4).

5. A cable feed-through device according to claim 3 or 4, wherein the fire-resistant plate (3) or a further fire-resistant plate (3') is arranged between the sealing plate (4) and back plate (5).

6. A cable feed-through device according to one of the preceding claims, wherein the fire-resistant plate (3, 3') is provided as sound protection.

7. A cable feed-through device according to one of the preceding claims, wherein the sealing plate (4) and the fire-resistant plate (3, 3') in each case comprise at least one nominal feed-through (8).

8. A cable feed-through device according to claim 7, wherein the at least one nominal feed-through of the sealing plate (4) comprises means for reclosure of the nominal feed-through.

9. A cable feed-through device according to one of the preceding claims, wherein the base plate (1) comprises fastening means (2) for an assembly of the device.

10. A cable feed-through device according to one of the preceding claims, wherein the at least one feed-through opening of the base pate (1) has a diameter which is smaller than the diameter of the at least one feed-through opening of the back plate (5).

11. A cable feed-through device according to one of the preceding claims, wherein the fire-resistant plate (3,3') assumes a locking function.

12. A cable feed-through device according to claim 11, wherein the sealing plate (4) and the fire-resistant plate (3, 3') form a cable pull-relief by way of diameters of the at least one nominal feed-through (8) being matched to one another.

13. A cable feed-through device according to one of the claims 8 to 12, equipped with a cable, wherein the at least one nominal feed-through (8) of the fire-resistant plate (3, 3') has a diameter which is smaller to or equal to the diameter of the cable, and wherein the at least one nominal feed through (9) of the sealing plate (4) is smaller than the diameter of the cable.

## Revendications

1. Ensemble de passage de câble doté d'une protection contre l'incendie et présentant une plaque de base (1) et une plaque dorsale (5) qui présentent au moins une ouverture de passage (18) permettant le passage de câbles ou de tuyaux flexibles, une plaque (3, 3') de protection contre l'incendie en un matériau qui mousse lorsqu'il est chauffé étant disposé entre la plaque de base et la plaque dorsale et parallèlement à ces dernières, **caractérisé par**
un élément élastique qui applique une poussée sur la plaque (3, 3') de protection contre l'incendie en cas d'incendie.

2. Ensemble de passage de câble selon la revendication 1, dans lequel le moyen d'application d'une poussée sur la plaque (3, 3') de protection contre l'incendie est disposé de telle sorte que la poussée exercée agisse perpendiculairement au système de plaques.

3. Ensemble de passage de câble selon l'une des revendications 1 et 2, dotée d'une plaque d'étanchéité (4) disposée entre la plaque de base (1) et la plaque dorsale (5).

4. Ensemble de passage de câble selon la revendication 3, dans lequel la plaque (3) de protection contre l'incendie est disposée entre la plaque de base (1) et la plaque d'étanchéité (4).

5. Ensemble de passage de câble selon les revendications 3 ou 4, dans lequel la plaque (3) de protection contre l'incendie ou une autre plaque (3') de protection contre l'incendie sont disposées entre la plaque d'étanchéité (4) et la plaque dorsale (5).

6. Ensemble de passage de câble selon l'une des revendications précédentes, dans lequel la plaque (3, 3') de protection contre l'incendie est prévue comme protection contre le bruit.

7. Ensemble de passage de câble selon l'une des revendications précédentes, dans lequel la plaque d'étanchéité (4) et la plaque (3, 3') de protection contre l'incendie présentent au moins un passage de consigne (8).

8. Ensemble de passage de câble selon la revendication 7, dans lequel le ou les passages de consigne (8) de la plaque d'étanchéité (4) présentent des moyens permettant de refermer le passage de consigne.

9. Ensemble de passage de câble selon l'une des revendications précédentes, dans lequel la plaque de base (1) présente des moyens de fixation (2) qui permettent le montage du dispositif.

10. Ensemble de passage de câble selon l'une des revendications précédentes, dans lequel la ou les ouvertures de passage de la plaque de base (1) ont un diamètre plus petit que le diamètre de la ou des ouvertures de passage de la plaque dorsale (5).

11. Ensemble de passage de câble selon l'une des revendications précédentes, dans lequel la plaque (3, 3') de protection contre l'incendie assure une fonction de verrouillage.

12. Ensemble de passage de câble selon la revendication 11, dans lequel la plaque d'étanchéité (4) et la plaque (3, 3') de protection contre l'incendie forment un délestage de traction du câble par le fait que le diamètre du ou des passages de consigne (8) sont accordés les uns par rapport aux autres.

13. Ensemble de passage de câble selon l'une des revendications 8 à 12, présentant un câble, le ou les passages de consigne (8) de la plaque (3, 3') de protection contre l'incendie présentant un diamètre plus petit ou égal au diamètre du câble, le ou les passages de consigne (8) de la plaque d'étanchéité (4) étant plus petits que le diamètre du câble.
